# EUROPEAN PATENT SPECIFICATION

(11) **EP 0 653 483 B1**
(45) Date of publication and mention of the grant of the patent: **14.04.1999**
(21) Application number: 94870103.2
(22) Date of filing: 24.06.1994
(51) Int. Cl.: C11D 3/395, D06L 3/06

(54) **The use of silicates in hypochlorite bleaching compositions**
Verwendung von Silikaten in Hypochlorit enthaltenden Bleichmittelzusammensetzungen
Usage des silicates dans les compositions de blanchiment à base d'hypochlorite

(30) Priority: 11.11.1993 EP 93203153; 22.02.1994 EP 94870033
(43) Date of publication of application: 17.05.1995
(60) Divisional application: 98117956.7
(73) Proprietor: THE PROCTER & GAMBLE COMPANY, Cincinnati, Ohio 45202 (US)
(72) Inventor: Agostini, Francesco, I-20145 Milano (IT); Agostini, Andrea, I-00046 Grottaferrata (Roma) (IT); Trigiante, Giuseppe, I-56100 Pisa (IT)
(74) Representative: Engisch, Gautier

(56) References cited:
- EP-A- 0 079 102
- EP-A- 0 311 175
- WO-A-88/05461
- US-A- 1 931 245
- US-A- 3 030 171
- US-A- 4 065 545
- Product Information "SKS-6, Detergent Builder of the Future" by Hoechst AG, May 1993
- Product Information "Britesil and Dizzil Disilicates" by Akzo, May 1992-May 1993
- JP-A-2014298 (Derwent Abstract)
- Technical Information "LEVERMATIC DESTAINER" by Lever Industrial Limited

## Description

### Technical field

The present invention relates to bleaching in laundry applications including hand washing as well as washing with automatic washing machines.

### Background of the invention

Liquid bleaching compositions are well-known in the art. Amongst the different bleaching compositions available, those relying on bleaching by hypochlorite are often preferred, mainly for performance reasons. Representative of the art is, for example, WO-A-8805461 which discloses an aqueous composition comprising hypochlorite, sodium carbonate and sodium hydroxide and the use of said composition for removing stains from the fabrics.

However, the drawbacks associated with the use of chlorine-based compositions are that said compositions may both damage and yellow the fabrics.

It is therefore an object of the present invention to provide a hypochlorite-containing composition, suitable for use in laundry, whereby the fabric whiteness is improved.

It is a further object of the present invention to provide a hypochlorite-containing composition, suitable for use in laundry, whereby fabric safety is improved.

We have now found that the previous objects can be met by formulating alkaline hypochlorite bleach compositions comprising an alkali metal hypochlorite, an alkali metal salt of silicate, preferably a strong source of alkalinity and optionally an alkali metal salt of carbonate. Said compositions allow to provide outstanding fabric whiteness as well as outstanding fabric safety on the fabrics treated therewith. In its broadest aspect, the present invention is based on the surprising finding that, in any given aqueous composition comprising an alkali metal hypochlorite, the use of an alkali metal salt of silicate will improve both the fabric whiteness by reducing the yellowing caused by hypochlorite and the fabric safety by reducing the fabric damage caused by hypochlorite on the fabrics bleached therewith.

A further advantage of the compositions in the present invention is that on top of their outstanding whitening action and fabric safety properties said compositions allow also good stain removal, in particular enzymatic stain removal.

Compositions comprising hypochlorite, a carbonate salt, a silicate salt and a strong source of alkalinity have been described in the art. Co-pending European patent application number 93870070.5 (publication number 0622451) compositions comprising hypochlorite, sodium hydroxide, a bleach stable perfume and as a buffering system, sodium carbonate and/or sodium silicate.

EP-A-311 175 to Unilever discloses a liquid sanitizer composition comprising at least 2% by weight of a caustic agent such as sodium hydroxide, from 0 to 1% of a surfactant, at least 3% by weight of an alkali metal hypochlorite and an alkali metal neutral silicate. Sodium carbonate is not disclosed. The compositions disclosed in the '175 patent application are used in industrial machines for bulk warewashing or fabrics washing to ensure an acceptable level of hygiene. The compositions of the '175 patent application prevent decomposition of hypochlorite and corrosion by hypochlorite.

JP-A-02014298 (abstract) discloses a cleaning composition for cleaning machine vessel comprising an aqueous solution of 0.5% to 15% by weight of hypochlorite and 3% to 30% by weight of silicate, preferably sodium silicate. Silicate is said to prevent decomposition of hypochlorite and corrosion by hypochlorite. Neither sodium hydroxide nor sodium carbonate are disclosed.

JP-A-60055100 (abstract) discloses hard-surface cleaners comprising from 1% to 10% by weight of hypochlorite, from 0.5% to 5% by weight of alkali metal hydroxide, preferably sodium hydroxide and from 0.5% to 8% by weight of an inorganic colloid such as amongst others Mg silicate. No sodium carbonate is disclosed.

US-A-3,030,171 discloses a process for bleaching sized cotton fabrics. That process comprises a step where fabrics are prepared before they are subsequently bleached with hydrogen peroxide. In said preparation step, the fabrics are contacted in very specific conditions with a composition comprising hypochlorite and, optionally, silicates.

The state of the art further comprises other documents disclosing more complicated fully formulated detergent compositions such as thickened compositions, or surfactant-based compositions, which may comprise hypochlorite, a strong source of alkalinity, carbonate salt and/or silicate salt amongst other ingredients, see for example EP-A-479370, EP-A-295093, EP-A-75813, EP-A-204472 and GB-A-2076010. The compositions disclosed therein are in the field of dishwashing and/or in the field of hard-surface cleaning.

Actually, the benefits derivable from the use of an alkali metal salt of silicate in an aqueous bleaching composition comprising hypochlorite for bleaching fabrics, i.e. improved fabric whiteness by reduced yellowing and reduced fabric damage on the fabrics bleached therewith, have not been acknowledged in the prior art.

### Summary of the invention

The present invention encompasses the use of an alkali metal salt of silicate, in an aqueous composition having a pH of from 9 to 14 and comprising an alkali metal hypochlorite and, preferably, a strong source of alkalinity, for improving the whiteness of fabrics bleached herewith by reducing the yellowing caused by hypochlorite.

The present invention further encompasses that use for further reducing the fabric damage caused by hypochlorite.

### Detailed Description of the invention

As a first essential ingredient, the compositions used in the present invention comprise hypochlorite. Various forms of alkali metal hypochlorite are commercially available and, although this is not critical for the present invention, it is preferred herein to use sodium hypochlorite. Compositions herein comprise a bleaching amount of an alkali metal hypochlorite, or mixtures thereof, which typically represents from 2% to 10% by weight of the total composition, based on active chlorine, of said alkali metal hypochlorite. Preferred compositions herein comprise from 3% to 6%, based on active chlorine, of an alkali metal hypochlorite, or mixtures thereof.

As a second essential ingredient, the compositions herein comprise an alkali metal salt of silicate, or mixtures thereof. Preferred compositions herein comprise from 0.02% to 5% by weight of the total composition of an alkali metal salt of silicate, or mixtures thereof, preferably from 0.1% to 2% and more preferably from 0.2% to 1.6%. The preferred alkali metal salt of silicate to be used herein is sodium silicate. Silicate salts allow buffering of the pH of the present compositions. Indeed, silicate salts act as an effective buffer in very diluted conditions, eg. when the dilution of a composition of the present invention in the wash solution in laundry application is up to about 8.5 g/l.

We speculate that the alkali metal salt of silicate in an aqueous composition comprising hypochlorite has a further action which allows to improve the fabric whiteness and the fabric safety of fabrics contacted with said composition. Indeed, said silicate salts allow to reduce or even eliminate the metal impurities both in said compositions as is and especially in the wash environment. Said metal impurities include heavy metal ions such as Cu, Fe, Ni, Co and the like, which have been found to adversely affect both fabric whiteness and fabric safety. This property is maximized by the presence of carbonate salts which remove from the wash solution magnesium and calcium which would otherwise bind to silicate salts.

Indeed, we believe that in the washing environment the metal ions catalyze the attack of hypochlorite on fabrics with the generation of yellow oxidized species. It is further speculated that said metal ions are adsorbed per se on oxidized fabrics as colored species and catalyze the degradation of the brighteners adsorbed on fabrics. Also said metal ions stabilize colored pigments of enzymatic stains such as blood and grass. Also metal ions catalyze the depolymerisation of cotton fibers which leads to reduced tensile strength of the fabrics, thereby reducing fabrics resistance.

As a third ingredient, the compositions herein may comprise a strong source of alkalinity. Preferred compositions herein comprise less than 2% by weight of the total composition of said strong source of alkalinity, or mixtures thereof, preferably of from 0.04% to 1.5% and more preferably of from 0.1% to 0.9%. Examples of strong sources of alkalinity are alkali metal hydroxides, such as potassium and/or sodium hydroxide, or alkali metal oxides such as sodium and/or potassium oxide.

Accordingly, the compositions herein have a pH as is of from 9 to 14, preferably of from 9.5 to 13 and more preferably of from 9.5 to 12. It is in this alkaline range that the optimum stability and performance of the hypochlorite is obtained.

As an optional but highly preferred ingredient, the compositions herein further comprise an alkali metal salt of carbonate, or mixtures thereof. Accordingly, the compositions herein comprise from 0% to 5% by weight of the total composition of an alkali metal salt of carbonate, or mixtures thereof, preferably from 0.1% to 4% and more preferably from 0.1% to 3%. The preferred alkali metal salt of carbonate to be used herein is sodium carbonate. Carbonate salts also allow buffering of the pH of the present compositions. In fact, said carbonate salts work as an effective buffer capable of restraining the pH drop coming from the dilution of a composition of the present invention in the wash solution in laundry application when said dilution is in the range of from about 9 to about 18 g/l. It is also suspected that the buffering of the hypochlorite compositions herein reduces harshness to hands. Also, said carbonate salts act as a Ca/Mg precipitation system and thus remove from the wash solution calcium and magnesium.

Indeed, due to the combined action of silicate salts and carbonate salts, the pH of a composition herein remains constant throughout use, i.e. the pH of a diluted composition is buffered from the moment the dilution is completed and until said hypochlorite bleaching composition is started to be rinsed away from the fabrics to which it has previously been contacted. We speculate that the improvement in fabric safety is also due to the combined action of silicate salts and carbonate salts, which by their combined buffering action, reduce the conversion of hypochlorite into hypochlorous acid, the species which we have found to be the most responsible for the fabric damage.

The compositions comprise water, preferably, the water is present in levels from about 78% to about 98% by weigh of the total aqueous liquid bleaching composition.

The compositions herein provide improved fabric whiteness as well as fabric safety. By "improved fabric whiteness" it is meant herein that the whiteness on fabric achieved by using the hypochlorite compositions of the present invention is improved by reducing the yellowing caused by hypochlorite compared to the whiteness obtained by using the same hypochlorite compositions but without any alkali metal salt of silicate. By "improved fabric safety" it is meant herein that the damage caused on fabric by using the hypochlorite compositions of the present invention is reduced compared to the damage caused by using the same hypochlorite compositions but without any alkali metal salt of silicate.

The compositions herein are used in diluted form in laundry application. The expression "use in diluted form" herein includes dilution by the user, which occurs for instance in hand laundry applications, as well as dilution by other means, such as in a washing machine. Typical dilution levels are of from 0.4% to 20% for hand laundry application and 0.1% to 10% in a washing machine.

The present invention will be further illustrated by the following examples.

### Experimental data

The following compositions are made by mixing the listed ingredients in the listed proportions:

| Compositions (weight %) | 1 | 2 |
|---|---|---|
| Sodium hypochlorite | 5.0 | 5.0 |
| Sodium hydroxide | 0.7 | 0.7 |
| Sodium carbonate | 1.0 | 1.0 |
| Sodium silicate | --- | 1.0 |
| Water | ------100%----------------- | |
| pH | 13 | 13 |

Composition 1 is an hypochlorite-containing composition taken as a reference and commercially available. Composition 2 is representative of the use according to the present invention, i.e. composition 2 consists of sodium hypochlorite, sodium carbonate, sodium silicate, sodium hydroxide as the strong source of alkalinity and water.
1) A handwash test has been carried out. The test was performed in a plastic basin. First 170 g of a composition of the present invention was diluted in 10 liters of tap water. From this solution samples of 500 g were taken and heated at 40°C. Then the tracers (white cotton fabric and stained tracers) were added into these samples. At the end of the washing cycle the tracers were rinsed and dried. Then the tracers were evaluated by visual grading.
The table below lists the results obtained for composition 2 versus composition 1.

| | Whiteness single | Enzymatic stain removal |
|---|---|---|
| Composition 2 vs. 1 | 1.5s | 0.5s |

Where:
- results are expressed on a 0 to 4 performance scale.
- S identifies statistically reproducible results.

Comments:
The data clearly shows the unexpected whiteness improvement delivered by the present invention (composition 2 versus composition 1). The data also shows that the present invention provides good enzymatic stain removal.

2) A multicycle test in automatic washing machine has been carried out. A washing was performed in an automatic washing machine at 60°C for 45 minutes with a washing solution comprising 8.5 g/l of a composition herein before mentioned. Then the tracers (white cotton fabric and stained tracers) together with ribbons were added into the washing solution. At the end of each washing cycle the tracers and ribbons were rinsed. After 15 washing cycles the damage on the fabrics was evaluated by pulling said ribbons until they broke. The force necessary to break the ribbons was measured with an Instron tensilometer. The lower the force needed to break said ribbons, the more serious is the damage caused on the fabrics.
The results obtained were the following:
65 Kg of tensile strength for a ribbon taken as a reference, i.e. a ribbon which has not been washed.
25 Kg of tensile strength for a ribbon after 15 washing cycles when using composition 1.
40 Kg of tensile strength for a ribbon after 15 washing cycles when using composition 2.

Comments: The data clearly shows the unexpected safety improvement delivered by the present invention as compared to a composition of the prior art (composition 1).

## Claims

1. The use of an alkali metal salt of silicate, in an aqueous composition having a pH of from 9 to 14 and comprising an alkali metal hypochlorite and, preferably, a strong source of alkalinity, for improving the whiteness of fabrics bleached herewith by reducing the yellowing caused by hypochlorite.

2. The use according to claim 1 for further reducing the fabric damage caused by hypochlorite.

3. A use according to claims 1 or 2 wherein said strong source of alkalinity is an alkali metal hydroxide, preferably sodium hydroxide and wherein the pH is of from 9 to 14.

4. A use according to any of the preceding claims wherein said composition comprises from 2% to 10% by weight of the total composition, based on active chlorine, of hypochlorite.

5. A use according to any of the preceding claims wherein said composition comprises from 0.02% to 5% by weight of the total composition of an alkali metal salt of silicate, preferably of from 0.1% to 2% and more preferably of from 0.2% to 1.6% and wherein said alkali metal salt of silicate is preferably sodium silicate.

6. A use according to any of the preceding claims wherein said composition comprises from 0.1 % to 4% by weight of the total composition of an alkali metal salt of carbonate, preferably of from 0.1% to 3% and wherein said alkali metal salt of carbonate is preferably sodium carbonate.

## Patentansprüche

1. Verwendung eines Silicat-Alkalimetallsalzes in einer wäßrigen Zusammensetzung, die einen pH von 9 bis 14 aufweist und ein Alkalimetallhypochlorit und vorzugsweise eine starke Alkalinitätsquelle umfaßt, zur Verbesserung des Weißgrades von damit gebleichten Textilien durch Verringerung des durch Hypochlorit verursachten Vergilbens.

2. Verwendung nach Anspruch 1 zur weiteren Verringerung der durch Hypochlorit verursachten Gewebeschädigung.

3. Verwendung nach Anspruch 1 oder 2, wobei die starke Alkalinitätsquelle ein Alkalimetallhydroxid, vorzugsweise Natriumhydroxid ist, und wobei der pH 9 bis 14 beträgt.

4. Verwendung nach mindestens einem der vorangehenden Ansprüche, wobei die Zusammensetzung 2 bis 10 Gew.-% der gesamten Zusammensetzung, basierend auf aktivem Chlor, Hypochlorit umfaßt.

5. Verwendung nach mindestes einem der vorangehenden Ansprüche, wobei die Zusammensetzung 0,02 bis 5 Gew.-% der gesamten Zusammensetzung eines Silicat-Alkalimetallsalzes, vorzugsweise 0,1 bis 2 % und weiter vorzugsweise 0,2 bis 1,6 %, umfaßt, und wobei das Silicat-Alkalimetallsalz vorzugsweise Natriumsilicat ist.

6. Verwendung nach mindestens einem der vorangehenden Ansprüche, wobei die Zusammensetzung 0,1 bis 4 Gew.-% der gesamten Zusammensetzung eines Carbonat-Alkalimetallsalzes, vorzugsweise 0,1 bis 3 %, umfaßt, und wobei das Carbonat-Alkalimetallsalz vorzugsweise Natriumcarbonat ist.

## Revendications

1. Utilisation d'un sel silicate de métal alcalin dans une composition aqueuse ayant un pH de 9 à 14 et comprenant un hypochlorite de métal alcalin et, de préférence, une source forte d'alcalinité, pour améliorer la blancheur d'étoffes blanchies avec celle-ci en réduisant le jaunissement provoqué par l'hypochlorite.

2. Utilisation selon la revendication 1, pour réduire encore plus l'endommagement des étoffes provoqué par l'hypochlorite,

3. Utilisation selon les revendications 1 ou 2, dans laquelle ladite source forte d'alcalinité est un hydroxyde de métal alcalin, de préférence l'hydroxyde de sodium, et dans laquelle le pH est de 9 à 14.

4. Utilisation selon l'une quelconque des revendications précédentes, dans laquelle ladite composition comprend de 2 % à 10 % en poids, par rapport à la composition totale, sur la base du chlore actif, d'hypochlorite.

5. Utilisation selon l'une quelconque des revendications précédentes, dans laquelle ladite composition comprend de 0,02 % à 5 % en poids, par rapport à la composition totale, d'un sel silicate de métal alcalin, de préférence de 0,1 % à 2 %, et de préférence encore de 0,2 % à 1,6 %, et dans laquelle ledit sel silicate de métal alcalin est de préférence le silicate de sodium.

6. Utilisation selon l'une quelconque des revendications précédentes, dans laquelle ladite composition comprend de 0,1 % à 4 % en poids, par rapport à la composition totale, d'un sel carbonate de métal alcalin, de préférence de 0,1 % à 3 %, et dans laquelle ledit sel carbonate de métal alcalin est de préférence le carbonate de sodium.
